# EUROPEAN PATENT APPLICATION

(11) **EP 2 905 716 A1**
(43) Date of publication of application: **12.08.2015**
(21) Application number: 14305167.0
(22) Date of filing: 06.02.2014
(51) Int. Cl.: G06F 21/36, G06F 3/0488

(54) **Method for launching an application identified by an icon, corresponding terminal**

(71) Applicant: Thomson Licensing, 92130 Issy-les-Moulineaux (FR)
(72) Inventor: Langlois, Tristan, 35 576 Cesson Sévigné (FR); Morin, Thomas, 35 576 Cesson Sévigné (FR); Le Roux, Mikel, 35 576 Cesson Sévigné (FR)
(74) Representative: Browaeys, Jean-Philippe

(57) **Abstract**

Terminal (T) adapted for launching an application (6) identified by an icon (I) displayed on a display screen (1) of the terminal (T), which comprises:
- an interface (1) configured for selecting the icon (I) of said application (6), the selection defining a point of selection (P);
- a drawing module (8) configured to allow a user to draw, on the display screen (1), a shape (S) from said point of selection (P);
- a shape recognition module (9) configured to compare a drew shape (S) with a reference shape associated with said user, so as to launch said application (6) and identify the user, when the drew shape (S) corresponds to a reference shape associated with said user.

## Description

### TECHNICAL FIELD

The present invention generally relates to identification processes of user willing to use an application, for instance, stored on a terminal shared by different persons.

### BACKGROUND ART

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

It is already known to have access to a given application running on a client terminal (e.g. personal computer, a tablet, a smartphone, etc.) through an authentication or identification process. During such an authentication/identification process, after launching the desired application by selecting (e.g. touch, click) the icon associated with said application, a user may have to enter his(her) personal login into a dedicated window followed by his(her) personal access code (so called password) at a virtual keypad appearing on the screen of the client terminal. The keypad is usually formed by a plurality of cells, each cell being identified by a figure, letter or any other character or the like.

Nevertheless, a drawback of such an authentication/identification process relies on the fact that the user has to perform the three following steps, namely:
- launching the application by selecting the icon associated with;
- entering his(her) login into a dedicated window;
- entering his(her) personal access code at a virtual keypad.
Such a succession of steps appears to be time consuming and not user friendly.

Even if some client terminals can store the login and password of a user for a given application running on said terminals, the login and password of said user have to be entered again when another user has used said application with his(her) personal parameters in between times. In other words, although such a combination of login and password provides security and allows the terminal to open the user's profile, it becomes time consuming when different users use the same terminal successively and have to identify again.

The present invention attempts to remedy at least the above mentioned drawbacks.

### SUMMARY

To this end, the invention concerns a method for launching an application identified by an icon on a display screen of a terminal,
which is remarkable in that said method comprises:
- selecting the icon of said application, which defines a point of selection;
- drawing, on the display screen, a shape from said point of selection;
- launching said application and identifying a user, when the drew shape corresponds to a reference shape associated with said user.

Thus, thanks to the present invention, the identification of a user - willing to use an application on a terminal - may be performed concurrently with the launch of said application.

In an embodiment compliant with the present invention wherein the display screen being a touch screen, the selection of the icon and the drawing of the shape are carried out by touching the display screen.

In a first aspect of said embodiment, the selection and the drawing may be successively carried out without releasing the touch of selection, between the selection and the drawing.

In another aspect of said embodiment:
- the selection is obtained by clicking on said icon, thanks to the cursor of a control element connected to said terminal;
- the shape is drew by moving said cursor from the selection point without releasing the click of selection.

In addition, after the selection of said icon, a drawing zone can be displayed on the screen.

Moreover, the drawing zone can be a grid comprising a plurality of cells, wherein the point of selection may be attached to a cell of the grid.

In addition, the drew shape can be defined by a succession of cells.

In a further aspect of the present invention, the identification of the user can correspond to the opening of a user's profile attached to said application.

The present invention also concerns a terminal adapted for launching an application identified by an icon displayed on a display screen of the terminal, characterized in that it comprises:
- an interface configured to select the icon of said application, the selection defining a point of selection;
- a drawing module configured to allow a user to draw, on the display screen, a shape from said point of selection;
- a shape recognition module configured to compare a drew shape with a reference shape associated with said user, so as to launch said application and identify the user, when the drew shape corresponds to a reference shape associated with said user.

The present invention also concerns a computer program product downloadable from a communication network and/or recorded on a medium readable by computer and/or executable by a processor, comprising program code instructions for implementing a method for launching an application identified by an icon on a display screen of a terminal, comprising:
- selecting the icon of said application, which defines a point of selection;
- drawing, on the display screen, a shape from said point of selection;
- launching said application and identifying a user, when the drew shape corresponds to a reference shape associated with said user.

Besides, the present invention concerns a non-transitory program storage device, readable by a computer, tangibly embodying a program of instructions executable by the computer to perform a method for launching an application identified by an icon on a display screen of a terminal, comprising:
- selecting the icon of said application, which defines a point of selection;
- drawing, on the display screen, a shape from said point of selection;
- launching said application and identifying a user, when the drew shape corresponds to a reference shape associated with said user.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF DRAWINGS

The invention will be better understood and illustrated by means of the following embodiment and execution examples, in no way limitative, with reference to the appended figures on which:
- Figure 1 is a flow chart illustrating the method for launching an application with a user's profile, according to a preferred embodiment of the present invention;
- Figure 2 is an exemplary of a mobile terminal wherein the method of Figure 1 might be implemented;
- Figure 3 shows a drawing zone displayed on a screen of the terminal of Figure 2, once a user has selected an icon attached with a desired application;
- Figure 4 depicts a shape, drew by a user, in the drawing zone of Figure 3.

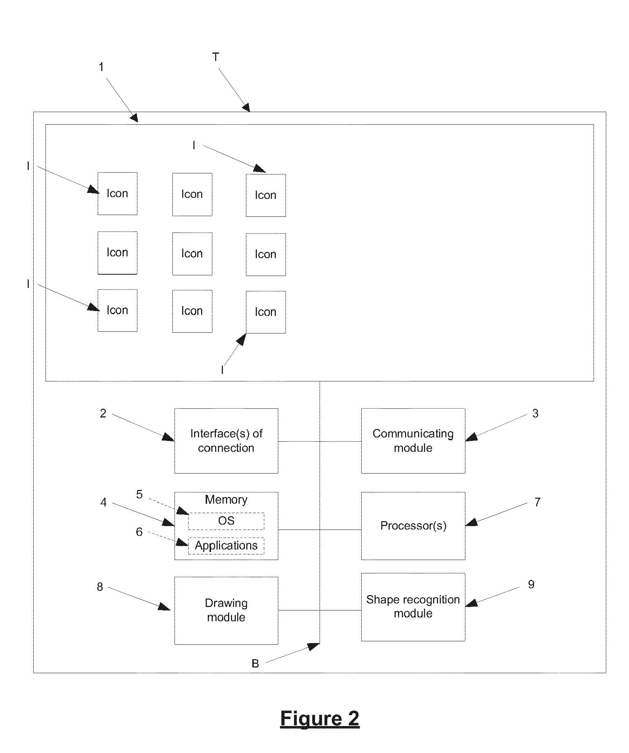

In Figures 2 to 4, some of the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DESCRIPTION OF EMBODIMENTS

It is to be understood that the figures and descriptions of the present invention have been simplified to illustrate elements that are relevant for a clear understanding of the present invention, while eliminating, for purposes of clarity, many other elements found in typical digital terminals.

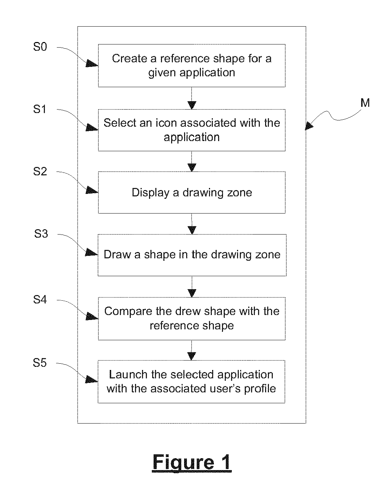

As described above, the present disclosure provides a method M (see Figure 1) wherein a user may concurrently launch an application and identify himself. In a preferred embodiment, such a method M is operative in a mobile computing terminal T (such as smartphone, a tablet, a laptop, etc.), as illustrated in Figure 2, comprising a display interface 1. Naturally, said method might also be implemented in a fixed terminal (e.g. a personal computer).

In operation, the method according to the preferred embodiment operates to provide to a user an access to a given application through the terminal T without using a personal login. In this manner, the user can identify him(her)self concurrently with the launch of said application, so that the desired application opens with the profile of the user, in case said profile has been preliminarily created by the user.

As shown in Figure 2, in the preferred embodiment, the mobile terminal T - implementing the method M - can be a smartphone or a touchpad, or the like, which comprises:
- one or more interfaces of connection 2 (wired and/or wireless, as for example Wi-Fi, Ethernet, etc.) to a Local Area Network (LAN) and/or Wide Area Network (WAN) as the Internet. Naturally, in a variant, the terminal T might be devoid of any interface of connection;
- a communication module 3 containing the protocol stacks to communicate with one or more other local or remote terminals belonging to a local or wide area network. In particular, the communication module 3 comprises the TCP/IP stack well known in the art. Of course, it could be any other type of network and/or communicating means enabling the mobile terminal T to communicate with such other terminals;
- a memory 4, which represented for clarity reasons in the form of a single block, but comprises at one and the same time random-access memory, read-only memory and reprogrammable persistent memory (of example "Flash" type);
- an operating system 5 (e.g. Apple IOS or Google Android) and applications 6, which are stored in said memory 4;
- one or more processor(s) 7 (e.g. a micro-processor, a micro-controller, a digital signal processor, a micro-computer, etc.) - forming, for instance, a Central Processing Unit and/or a Graphic Processing Unit - for executing the applications and programs stored in the memory 4 of the terminal T;
- a touch-sensing interface 1 configured to receive input from a user's touch to be transferred to the processor(s) 7. In the preferred embodiment, the display interface and the touch-sensing interface formed the same element, so called touch screen (nevertheless, in a variant, the touch screen could be a separate and standalone element connected to the terminal T). In addition, the touch-screen 1 recognizes user's touches and, notably, the position of such touches. In operation, the touch screen 1 detects and reports the touches to the processor(s) 7 which then interprets said touches in accordance with its programming. The touch screen 1 can relies on different technologies, such as (without any limitation) capacitive sensing, resistive sensing, pressure sensing, optical sensing, and/or the like. According to the invention, the touch screen 1 is preferably based on multipoint sensing in order to distinguish multiple touches that occur at the same time on said touch screen 1. In another variant, the touch-sensing interface might be substituted by a well-known physical keyboard connected to the display interface;
- an internal bus B to connect the various modules and all means well known to the skilled in the art for performing the generic terminal functionalities.

As described above, the method M according to the present invention is operative in the terminal T of Figure 1. Applications 6 stored in the memory 4 of the terminal T are represented on the touch screen 1 (used as a display screen) by a corresponding icon I (one icon I by application 6).

In particular, as illustrated in Figure 1, in order to be identified during the launch of a given application 6 stored on the terminal T, a user - wishing to launch said application 6 - preliminary needs (step S0) to create his(her) own profile associated with said application.

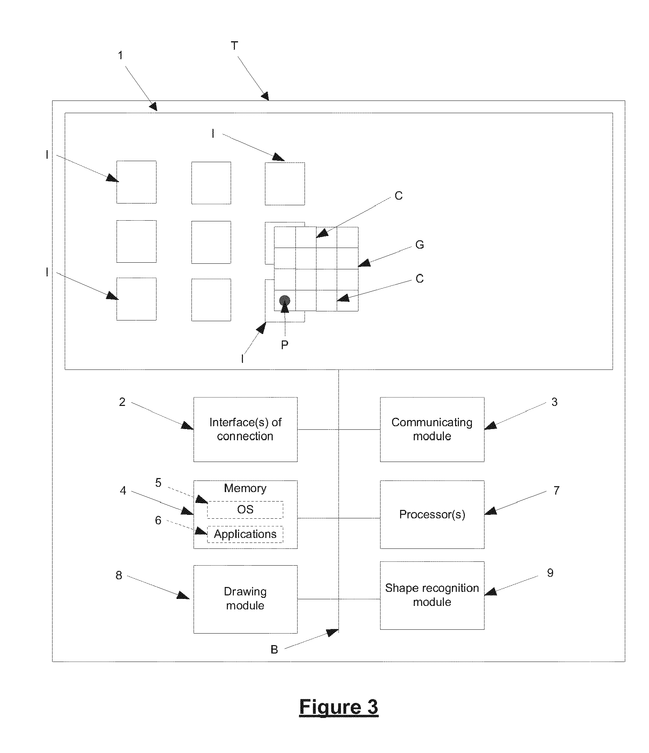

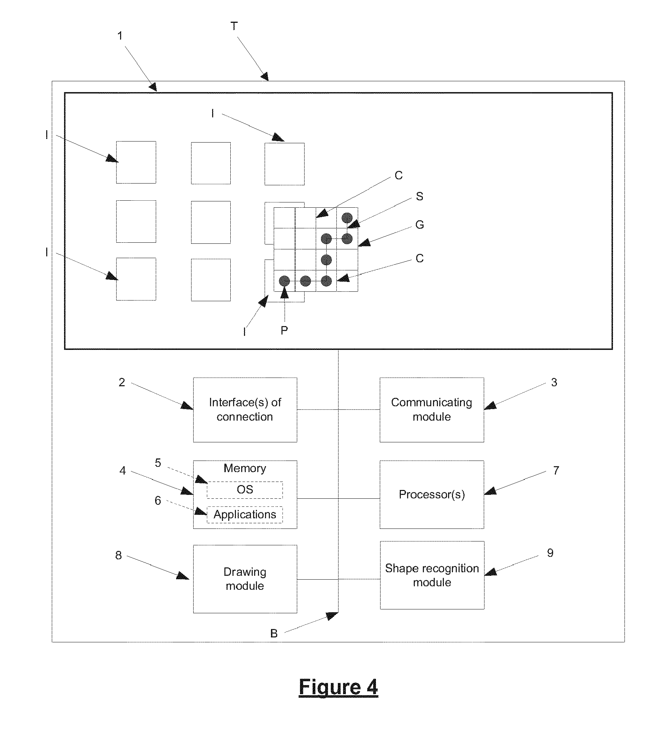

In particular, in step S0, the user draws a personal shape - hereinafter called reference shape (not represented in the Figures) - in a drawing zone G displayed on the touch screen 1 (see Figures 3 and 4).

In an illustrative, but non limitative example, the drawing zone is represented by a grid G comprising a plurality of cells C are arranged in rows and columns to form a rectangular grid (e.g. four rows and four columns). In this example, the reference shape has, by default, its first selected cell C located in a corner of the grid. Obviously, the first cell of the reference shape might have a different position (e.g. the center of the grid G).

A cell C belongs to the reference shape when the user preferably stops over said cell C for a given period of time (e.g. half a second or a second), otherwise the cell C is not selected and does not take part of the reference shape.

It should be understood that the number and the arrangement of cells may differ, in a variant, from this illustrative example (e.g. eight columns and eight rows), depending on the required security and the number of distinct shapes. The greater the number of cells of the grid G, the higher will be the number of available distinct shapes.

In a step S1 of the method M, the user touches (e.g. with a finger, a stylus, etc.) the icon I corresponding to the given application 6 for which he/she has created a profile (and more especially a reference shape), in order to launch the application. Said touch - hereinafter called selection point - is illustrated by the filled circle in Figure 3.

After touching the corresponding icon I for a predetermined period (e.g. 1 second or 2 seconds), a grid G (as the one used for the profile creation) is displayed, in a step S2, on the touch screen 1 by a drawing module 8 of the terminal T. The bottom left corner of the grid G is located at the selection point P (see Figure 3). The selection point defines the first selected cell C of the reference shape. Naturally, in a variant, the selection point P might correspond to any other cell C of the grid G.

In case the user stops touching the touch screen 1, the grid G disappears, so that he/she cannot draw the shape anymore and the launch of the desired application is aborted.

In a variant, even if the user releases the touch on the screen 1, the grid G may still be displayed during a predefined time (e.g. half a second or a second), before disappearing if no further touch is done on said touch screen 1.

To draw his(her) reference shape associated with his(her) profile attached to the desired application, the user preferably keeps in a step S3, touching the screen 1 after touching the icon I of the desired application 6 - without releasing the touch - and then goes over the cells C defining the reference shape, in the correct order - still without releasing the touch on the touch screen 1 (the contact between the finger or the stylus of the user and the touch screen 1 is maintained). The selected cells C - identified by the drawing module 8 (e.g. in terms of X and Y coordinates) - are represented with a filled circle in the Figure 4. The drawing module 8 may comprise or may use one or more processors 7.

In a refinement, to allow a user to define a more complex reference shape comprising the same cell C selected several times, the drawing module 8 may associate each selected cell C with the previous selected cell C.

In addition, to facilitate the drawing of the reference shape, the selected icon I (or a part of it) can follow the movement of the finger or stylus of the user touching the touch screen 1, so that he/she can know exactly where the touch is located on said screen 1.

An example of such a drew shape S is illustrated in Figure 4, the shape S being represented by the filled circles in the cells C. In no case, the present invention is restricted to such an example of shape. As previously mentioned, it should be understood that, to obtain a more sophisticated shape, the number of cells of the grid G might advantageously be increased.

As shown on Figure 1, in a further steps S4, the drew shape S is compared with the reference shape, previously stored, thanks to a shape recognition module 9 integrated in the terminal T. In particular, the shape recognition module 9 determined whether the cells C forming the drew shape S are the same than the ones defining the reference shape. In a variant or in a complement, a margin of error might be accepted (for instance, the reference shape and the drew shape S differ only from a given number of cells). In a further variant, the shape recognition module 9 may use a shape. Any known shape recognition algorithm might be used to implement step S4. The shape recognition module 9 may comprise or may use one or more processors 7.

When the shape recognition module 9 determines that the reference and drew shapes S are identical (possibly with a margin of error), the application 6 associated with the selected icon I is launched, in a step S5, with the profile of the user. In other words, there is concurrently a launched of the desired application and an identification of the user willing to use said application.

In case the drew shape S differs from the reference shape, the application 6 is launched but no profile is opened. The application is then in a default mode. In a variant, the launch of the application 6 is aborted when the drew and reference shapes are different.

In another variant of the preferred embodiment, the drawing zone G may be only a rectangular zone devoid of any cells C. Once said drawing zone G appears on the touch screen 1, the user can draw his(her) reference shape as previously described on said drawing zone G, without releasing the touching of the touch screen 1. In that case, the drew/reference shape can be defined by a succession of touch data in terms of X and Y coordinates associated with a sample time.

In a further variant, the drawing zone may not be visible to the user and may correspond to the display part (or at least partially) of the touch screen 1.

In further embodiment compliant with the preferred invention, a remote control element, such as a mouse, is connected to the terminal T and allows a user to select an icon I displayed on the touch screen 1. It should be understood that, in this embodiment, the display screen 1 might not be tactile.

In this further embodiment, the touch used in the preferred embodiment is substituted with a click on the mouse - thanks to its associated cursor displayed on the screen 1 - on the icon I corresponding to the desired application 6 to be launched by a user.

As in the preferred embodiment, after having selected an icon I displayed on the screen 1 with the mouse cursor, the user can draw a shape S on the drawing zone G by moving said cursor from the selection point without releasing the selection (namely the click) between the selection of the icon and the drawing.

The selected icon may be associated with said cursor, so as it follows its movement on the screen.

The steps S0 and S5 of the method M, as previously described, are also implemented in said further embodiment.

Besides, the flowchart and/or block diagrams in the Figures illustrate the configuration, operation and functionality of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. Method for launching an application (6) identified by an icon (I) on a display screen (1) of a terminal (T),
**characterized in that** said method comprises:
- selecting (S1) the icon (I) of said application (6), which defines a point of selection (P);
- drawing (S3), on the display screen (1), a shape (S) from said point of selection (P);
- launching (S5) said application (6) and identifying (S5) a user, when the drew shape (S) corresponds to a reference shape associated with said user.

2. Method according to claim 1, wherein, the display screen (1) being a touch screen (T), the selection (S1) of the icon (6) and the drawing (S3) of the shape (S) are carried out by touching the display screen (1).

3. Method according to claim 2, wherein the selection (S1) and the drawing (S3) are successively carried out without releasing the touch of selection, between the selection (S1) and the drawing (S3).

4. Method according to claim 1, wherein:
- the selection (S1) is obtained by clicking on said icon, thanks to the cursor of a control element connected to said terminal (T);
- the shape (S) is drew by moving said cursor from the selection point (P) without releasing the click of selection.

5. Method according to claim 4, wherein, after the selection (S1) of said icon (I), a drawing zone (G) is displayed on the screen (1).

6. Method according to any one of claims 1 to 5, wherein the drawing zone is a grid (G) comprising a plurality of cells (C).

7. Method according to 6, wherein the point of selection (P) is attached to a cell (C) of the grid (G).

8. Method according to claim 6 or 7, wherein the drew shape (S) is defined by a succession of cells (C).

9. Method according to any one of claims 1 to 8, wherein the identification (S5) of the user corresponds to the opening of a user's profile attached to said application (6).

10. Terminal adapted for launching an application (6) identified by an icon (I) displayed on a display screen (1) of the terminal (T),
**characterized in that** it comprises:
- an interface (1) configured to select the icon (I) of said application (6), the selection defining a point of selection (P);
- a drawing module (8) configured to allow a user to draw, on the display screen (1), a shape (S) from said point of selection (G);
- a shape recognition module (9) configured to compare a drew shape (S) with a reference shape associated with said user, so as to launch said application (6) and identify the user, when the drew shape (S) corresponds to a reference shape associated with said user.

11. Computer program product downloadable from a communication network and/or recorded on a medium readable by computer and/or executable by a processor, comprising program code instructions for implementing a method for launching an application (6) identified by an icon (I) on a display screen (1) of a terminal (T), comprising:
- selecting (S1) the icon (I) of said application (6), which defines a point of selection (P);
- drawing (S3), on the display screen (1), a shape (S) from said point of selection (P);
- launching (S5) said application (6) and identifying (S5) a user, when the drew shape (S) corresponds to a reference shape associated with said user.

12. Non-transitory program storage terminal, readable by a computer, tangibly embodying a program of instructions executable by the computer to perform a method for launching an application (6) identified by an icon (I) on a display screen (1) of a terminal (T), comprising:
- selecting (S1) the icon (I) of said application (6), which defines a point of selection (P);
- drawing (S3), on the display screen (1), a shape (S) from said point of selection (P);
- launching (S5) said application (6) and identifying (S5) a user, when the drew shape (S) corresponds to a reference shape associated with said user.
